# EUROPÄISCHE PATENTSCHRIFT

(11) **EP 0 688 705 B1**
(45) Veröffentlichungstag und Bekanntmachung des Hinweises auf die Patenterteilung: **05.04.2000**
(21) Anmeldenummer: 95107760.1
(22) Anmeldetag: 22.05.1995
(51) Int. Cl.: B60R 22/347, B60N 2/26, B60R 22/10

(54) **Gurtbandaufwickel- und Spannvorrichtung**
Device for winding up and tensioning seatbelts
Dispositif pour enrouler et tendre des ceintures

(30) Priorität: 24.06.1994 DE 9410036 U
(43) Veröffentlichungstag der Anmeldung: 27.12.1995
(73) Patentinhaber: Van Riesen GmbH u. Co. KG, D-32130 Enger (DE)
(72) Erfinder: Friedrich, Matthias, D-32130 Enger (DE); Wölfl, Volkmar, D-32602 Vlotho (DE)
(74) Vertreter: Vollmann, Heiko, Dipl.-Ing.

(56) Entgegenhaltungen:
- EP-B- 0 261 453
- WO-A-92/20547
- DE-A- 2 108 718

## Beschreibung

Die Erfindung betrifft eine Gurtbandaufwickel- und Spannvorrichtung für die beiden Schultergurte eines Gurtbandrückhaltesystems eines Kindersitzes.

Gurtbandrückhaltesysteme werden in Kraftfahrzeugen und anderen Fahrzeugen vorgesehen. Ein Problem dabei ist stets die korrekte Anlage des Gurtbandsystems an der zu sichernden Person. Während man dies bei der Sicherung erwachsener Personen durch eine ständig unter Federspannung stehende Wickelrolle in Verbindung mit einer Blockiereinrichtung und gegebenenfalls mit weiteren Einrichtungen wie Gurtstraffern und dergleichen realisieren kann, ist dies für Kinder, insbesondere Kleinkinder wegen der mangelnden Bewegungsdisziplin im Fahrzeug in dieser Weise nicht realisierbar. So ist bei Kinderrückhaltesystemen regelmäßig ein festes Gurtsystem vorgesehen, das nach dem Anlegen in der Regel manuell gespannt wird. Hiermit erfolgt auch gleichzeitig die individuelle Anpassung an die Größe des zu sichernden Kindes.

Es sind inzwischen Kinderrückhaltesysteme bekannt, bei denen das gesamte Gurtsystem mit nur einem Gurtband gespannt werden kann. Dabei sind die Schultergurte rückseitig des Sitzes zusammengeführt und an seiner Unterseite in eine von vorne zu betätigende Spann- und Klemmvorrichtung geführt. Aufgrund der Gurtführungen um fast den ganzen Sitz herum sind bei solchen Rückhaltesystemen besondere Vorkehrungen zur Reibungsverminderung in den Führungen zu treffen. Ein solches System ist daher aufwendig und störanfällig.

Da die Notwendigkeit von Rückhaltesystemen insbesondere auch für Kleinkinder zunehmend auch von den Fahrzeugherstellern erkannt wird ist man bestrebt, solche Kinderrückhaltesysteme nicht nur durch gesonderte Kindersitze, sondern auch fahrzeugeigen zu realisieren. Dann jedoch können konstruktionsbedingt die von den Kindersitzen bekannten Gurtsysteme keine Verwendung finden, insbesondere dann nicht, wenn auf eine möglichst verdeckbare und nur im Bedarfsfall zur Verfügung stehende Anordnung Wert gelegt wird.

Aus EP 0 261 453 B1 ist zwar eine Vorrichtung zum Einstellen der Gurtbandlänge eines Gurtbandsicherheitssystems bekannt, die beispielsweise hei Gurtbandrückhaltesystemen für Kinder im Schultergurtbereich eingesetzt wird, doch würde eine solche Vorrichtung beim Festeinbau im Kraftfahrzeug auf der Rückenlehne aufliegen und dann, wenn dort ein Erwachsener sitzen sollte, diesen im Sitzkomfort stark einschränken.

Aus DE 2 108 718 A ist eine Gurtbandaufwickel- und Spannvorrichtung zum Festeinbau in ein Fahrzeug bekannt. Bei dieser Vorrichtung werden die sitzseitigen Enden der Schultergurte rückseitig der Rückenlehne und unterhalb der Sitzlehne zu zwei dort drehbar auf einer Welle gelagerten Gurtbandwickelrollen geführt, die achsgleich mit Abstand nebeneinander angeordnet sind. Diese Gurtbandwickelrollen sind mittels einer schaltbaren Kupplung blockier- bzw. deblockierbar, wobei eine Rückholfeder vorgesehen ist, welche die Gurtbänder in deblockiertem Zustand der Kupplung aufwickelt bzw. spannt. Wesentliches konstruktives Element dieser Vorrichtung ist eine integrierte Lamellenbremse, welche durch Reibung Aufprallenergie verzerrt und somit die auf den Körper wirkende Gurtbandkraft nach oben begrenzt.

Die dort beschriebene Gurtbandaufwickel- und Spannvorrichtung ist zur Verwendung in Verbindung mit einem Gurtbandrückhaltesystem für Kinder, sei es als im Fahrzeug fest eingebautes System oder aber als Teil eines Add-on-Kindersitzes wenig geeignet, da sie nicht nur konstruktiv vergleichsweise aufwendig ist, sondern darüber hinaus auch konstruktiv in das Traggestell des Sitzes eingegliedert ist. Eine solche Gurtbandaufwickel- und Spannvorrichtung ist also konstruktiv in den Fahrzeugsitz zu integrieren, ein modulartiger oder nachträglicher Einbau, insbesondere im Bereich der Rückenlehne ist weder vorgesehen noch zweckmäßig wegen des dann nicht mehr erreichbaren Betätigungshebels. Der Einsatz einer solchen Gurtbandaufwickel- und Spannvorrichtung in modernen Add-on-Kindersitzen ist ohne sitzgestellseitige konstruktive Maßnahme nicht denkbar, so daß ein Einsatz bei den heute verwendeten selbsttragenden Kunststoffgestellen praktisch nicht möglich ist.

Vor diesem Stand der Technik liegt der Erfindung, ausgehend von einer Konstruktion, wie sie in DE 2 108 718 A offenbart ist, die Aufgabe zugrunde, eine Gurtbandwickel- und Spannvorrichtung zu schaffen, welche einerseits die besonderen Anforderungen an Gurtbandsicherungssysteme für Kinder erfüllt, jedoch andererseits mit geringem Aufwand verdeckt und unauffällig am Kindersitz, und zwar sowohl in Add-on- als auch in einem im Fahrzeug integrierten Kindersitz anbringbar ist. Die Vorrichtung soll darüber hinaus konstruktiv einfach im Aufbau und kostengünstig in der Herstellung sein.

Diese Aufgabe wird gemäß der Erfindung durch die in den Ansprüchen 1 und 10 aufgeführten Merkmale gelöst.

Grundgedanke der vorliegenden Erfindung ist es, die Gurtbandaufwickel- und Spannvorrichtung für beide Schultergurte eines Gurtbandrückhaltesystems in den rückseitigen Lchnenbereich des Kindersitzes zu verlegen, also dorthin, wo die Vorrichtung nicht sichtbar und auch für die zu sichernde Person nicht zugänglich ist. Hierzu ist es erforderlich, die Vorrichtung möglichst flach auszubilden. Da insbesondere für die Sicherung von Kindern ein nach dem Anlegen in der wirksamen Gurtbandlänge unveränderbares System erforderlich ist, sieht die erfindungsgemäße Gurtbandaufwickel- und Spannvorrichtung eine selbsttätig blockierende Einrichtung vor, welche die rückseitige im Lehnenbereich in einem Tragkörper nebeneinander gelagerten Gurtbandwickelrollen blockiert.

Um beim Anlegen des Gurtes die erforderliche Länge einstellen zu können, ist diese Einrichtung über entsprechende Betätigungsmittel auch deblockierbar, wobei dann die Kraft einer Wickel- und Spannfeder auf die Wellen der Wickelrollen wirkt und eine vorbestimmte Spannkraft auf das Gurtbandsystem aufbringt. Die Betätigung der Blockiereinrichtung kann vorteilhaft von der Vorderseite des Kindersitzes aus erfolgen, so daß trotz der vorteilhaften rückseitigen Anbringung eine bequeme Bedienung von vorne möglich ist.

Dadurch, daß beide Wickelrollen durch eine gemeinsame Wickel- und Spannfeder beaufschlagt sind, wird stets gewährleistet, daß beide Schultergurte gleich lang sind. Dies ist für die Sicherheit besonders wichtig, da dann im Belastungsfall bei einem Unfall die Rückhaltekraft auf beide Körperhälften gleichmäßig eingeleitet werden kann.

Gegenüber der aus DE 2 108 718 A bekannten Konstruktion sieht die erfindungsgemäße Lösung eine wesentliche konstruktive Vereinfachung vor, da der Tragkörper Teil der Vorrichtung und nicht konstruktiver Teil des Sitzes ist. Die Vorrichtung kann also unabhängig von der Sitzkonstruktion hergestellt und aufgebaut werden, so daß sie modulartig in eine entsprechende Ausnehmung der Rückenlehne eingliederbar ist, ohne den Sitz hierbei konstruktiv besonders anzupassen. Der Aufbau des Tragkörpers ist darüber hinaus einfach, da er aus Flachmaterial besteht, das heißt beispielsweise aus Stahlblech durch Stanzen und Biegen gefertigt werden kann. Die dadurch gebildeten seitlichen Schenkel dienen als Lager für die Welle oder Wellen der Wickelrollen. Zwischen den Wickelrollen ist eine Wickel- und Spannfeder vorgesehen, welche sich einerseits an der Welle und andererseits am Tragkörper abstützt. Der Tragkörper bildet also zugleich auch eine Art Gehäuse oder Montagebasis für die Vorrichtung, das bzw. die nahezu alle Bauteile aufnimmt.

Die Blockiereinrichtung weist gemäß der Erfindung eine auf jeder Welle vorgesehene Außenverzahnung im Bereich zwischen Wickelrolle und Spannfeder auf, die jeweils mit einer Innenverzahnung eines axial verschiebbar jedoch drehfest gelagerten Ringkörpers im Eingriff steht. Zwischen diesem Ringkörper und der Wickelrolle ist eine Druckfeder vorgesehen, welche den Ringkörper in seiner Eingriffsstellung auf der Außenverzahnung der Welle hält. Durch diese Konstruktion kann mit einfachen baulichen Mitteln eine zuverlässige selbsttätige Blockierung der Wickelrollen sichergestellt werden.

Um einerseits eine kompakte Bauweise, andererseits jedoch eine genügende Gurtbandreserve auf den Wickelrollen zu gewährleisten, ist es von Vorteil, wenn als Spannfeder eine Spiralfeder eingesetzt wird, welche nach Vorspannung mehrere Wellendrehungen ausführen kann. Um diese Spiralfeder zuverlässig zu führen und gegen äußere Einflüsse zu sichern, ist es zweckmäßig, sie mit einem Federgehäuse zu umgeben. Das Federgehäuse bildet vorteilhaft ein Festlager für die Feder, während das innere Federende mit den Wellenenden verbunden ist.

Bei der vorbeschriebenen vorteilhaften Anordnung von Ringkörpern können die Betätigungsmittel konstruktiv einfach und zugleich zuverlässig arbeitend ausgebildet werden, indem ein U-förmiger Bügel vorgesehen wird, welcher das Federgehäuse umgreift und mit seinen schräg nach innen zulaufenden Bügelenden in dafür vorgesehene Quernuten der Ringkörper so eingreift, daß durch Verschieben des Bügels in Richtung auf die gemeinsame Wellenachse die Ringkörper entgegen Federkraft axial verschoben werden und außer Eingriff mit den Außenverzahnungen gelangen. Dieser Bügel kann bevorzugt auch als Verdrehsicherung dienen, die Ringkörper können dann drehbar auf den Wellen bzw. Fortsätzen von Wickelkörpern gelagert sein. Dies erleichtert insbesondere auch die Montage.

Um ein Verkanten der Ringkörper beim axialen Verschieben zu vermeiden, ist es zweckmäßig, die Schenkelenden des Bügels gabelförmig auszubilden, derart, daß zu beiden Seiten der Wellenachse ein Gabelende liegt. Durch diese in bezug auf die Wellenachse symmetrische Belastung kann eine zuverlässige Deblockierung sowie auch die anschließend wieder erfolgende selbsttätige Blockierung sichergestellt werden.

Der Bügel wird bevorzugt am Ende einer Stange angebracht, die verschiebbar am Tragkörper gelagert ist und durch eine Ausnehmung vom rückseitigen Bereich der Lehne zum vorderseitigen geführt ist. Auf diese Weise kann ohne größere bauliche Änderungen im Lehnenbereich eine günstige Lage der Betätigungsmittel für die Vorrichtung erreicht werden. Derartige im Lehnenbereich nach oben herausgeführte Betätigungsmittel sind gut erreichbar und stören wenig.

Um sicherzustellen, daß nach dem Betätigen der Stange diese zusammen mit dem Bügel wieder in ihre Ausgangsstellung zurückgeht, ist es zweckmäig, eine entsprechende Feder vorzusehen, die vorzugsweise zwischen Tragkörper und einem Absatz der Stange in Form einer Schraubenfeder angeordnet wird.

Die Lagerung der Wickelrollen erfolgt vorteilhaft einerseits in einem endseitigen Schenkel des Tragkörpers und andererseits in dem ohnehin zwischen den Rollen vorhandenen Federgehäuse.

Die Erfindung ist nachfolgend anhand eines in der Zeichnung dargestellten Ausführungsbeispiels beschrieben. Es zeigen in stark vereinfachter Darstellung:
- Figur 1: eine Draufsicht auf die erfindungsgemäße Vorrichtung,

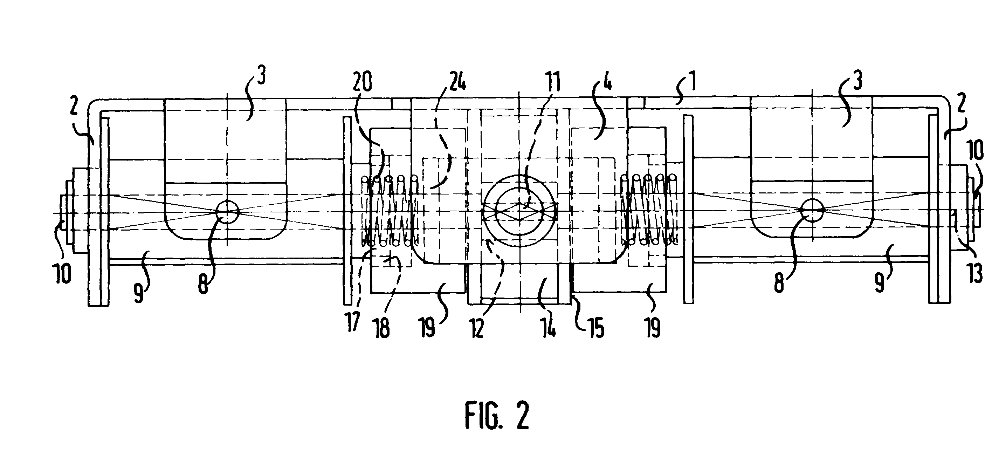

- Figur 2: eine Ansicht in Richtung des Pfeils II in Figur 1,
- Figur 3: einen Schnitt längs der Schnittlinie III-III in Figur 1 ohne Bügel und Betätigungsstange,
- Figur 4: einen Schnitt längs der Schnittlinie IV-IV in Figur 1.

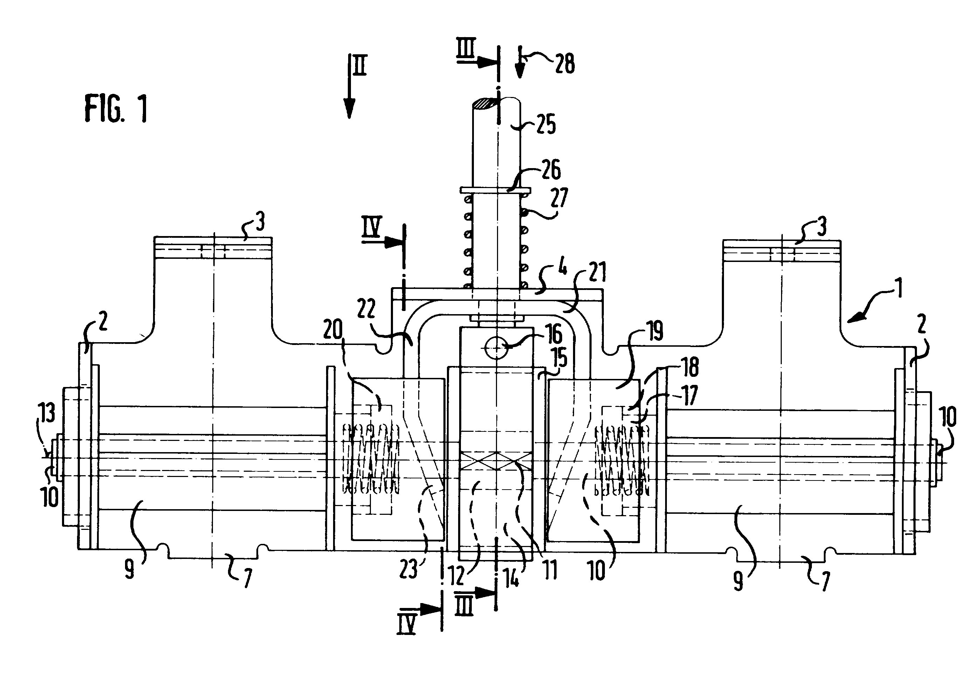

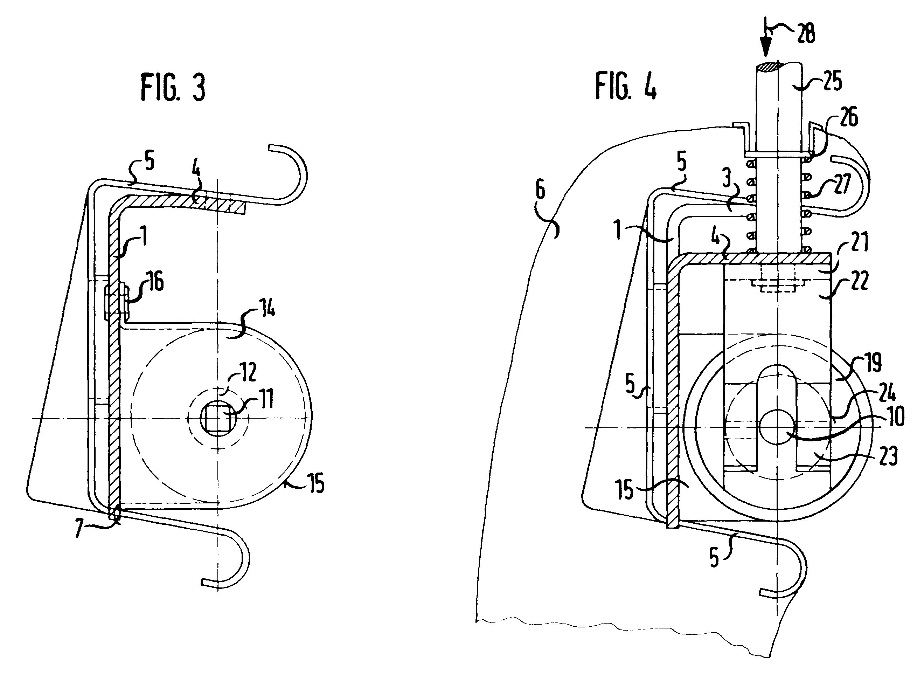

Die anhand der Figuren dargestellte Vorrichtung weist einen Tragkörper 1 auf, der aus Flachmaterial gebildet ist und die aus Figur 1 ersichtliche Grundfläche aufweist, von der aus zwei seitliche Schenkel 2 sowie zwei rückseitige Schenkel 3 und ein mittiger rückseitiger Schenkel 4 um rund 90° nach oben abgebogen sind. Dieser so gebildete Tragkörper 1 ist zur Befestigung innerhalb eines U-Profiles 5 vorgesehen, das bei Kindersitzen für Kraftfahrzeuge im rückseitigen oberen Lehnenbereich als Tragkonstruktion vorgesehen ist. Das Polster einer solchen Lehne ist in Figur 4 mit 6 gekennzeichnet. Wie es in Figuren 3 und 4 ersichtlich ist, wird das Tragprofil mit zwei an seiner Vorderseite befindlichen Vorsprüngen 7 in entsprechende Ausnehmungen dieses U-Profils 5 eingesteckt und über fluchtende Bohrungen 8 im anderen Schenkel des U-Profils sowie in den rückseitigen Schenkel 3 formschlüssig mit diesem verbunden.

Während die Schenkel 3 des Tragkörpers 1 zur Befestigung innerhalb des U-Profils 5 dienen, werden innerhalb der seitlichen Schenkel 2 die seitlichen Enden von Gurtbandwickelrollen drehbar gelagert, die auf Wellen 10 sitzen, deren zueinander weisende Enden als Vierkantprofile 11 ausgebildet sind und in einer ringförmigen Aufnahme 12, die mit einem entsprechenden Innenvierkantprofil ausgestattet ist, drehfest miteinander und der Aufnahme 12 verbunden sind. Die Wellen 10 liegen auf derselben Achse 13, die zugleich auch die Drehachse der Wickelrollen 9 bildet.

Am zylindrischen Außenumfang der Aufnahme 12 ist ein nicht dargestellter Schlitz vorgesehen, in dem das innere Ende einer Spiralfeder 14 festliegt, deren äußeres Ende in einem die Feder 14 sowie die Aufnahme 12 übergreifenden Federgehäuse 15 befestigt ist. Das Federgehäuse 15 ist wie aus Figur 3 ersichtlich mit einer Seite in der Bodenseite des Tragkörpers 1 eingesteckt und mit seinem flanschartigen Vorsprung an der anderen Seite über einen Niet 16 mit dieser Grundplatte befestigt. Das Federgehäuse 15 bildet zugleich das zweite Lager für die Wellen 10.

Zwischen jeder Wickelrolle 9 und dem Federgehäuse 15 weist jede Welle 10 auf einem abgesetzten Bereich eine Außenverzahnung 17 auf. Diese Außenverzahnung 17 jeder Welle 10 steht der in den Figuren dargestellten Blockierstellung der Vorrichtung im Eingriff mit einer Innenverzahnung 18 eines Ringkörpers 19, der drehbar auf der Welle 10 sitzt. Zwischen diesem mit Außenverzahnung 17 versehenen Wellenabsatz und dem Ringkörper 19 ist eine Schraubendruckfeder 20 angeordnet, die den Ringkörper 19 in seiner Eingriffsstellung mit der Außenverzahnung 17 hält.

Um zu verhindern, daß sich die Ringkörper 19 bei Drehung der Wellen 10 mitdrehen, ist ein U-förmiger Bügel 21 vorgesehen, der das Federgehäuse 15 seitlich übergreift und Schenkel 22 aufweist, deren Schenkelenden 23 schräg nach innen, also zum Federgehäuse 15 hin gerichtet sind und gabelförmig geteilt sind, so daß sie die Wellen 10 in diesem Bereich umgreifen und zu beiden Seiten der Drehachse angeordnet sind. Diese Schenkelenden 23 liegen in entsprechend ausgebildeten (siehe Figur 1) Nuten 24 der Ringkörper 19.

Der Bügel 21 ist in seinem Stegbereich mit einer Stange 25 verbunden, die eine Bohrung im Schenkel 4 des Tragkörpers 1 durchsetzt und durch eine Ausnehmung des U-Profils 5 sowie die damit verbundene Lehne des Kindersitzes geführt ist. Das obere Ende dieser Stange ist als Drucktaste ausgebildet, die an der Oberseite der Lehne zugänglich ist (siehe Figur 4). Auf der zylindrischen Stange 25 ist ein Absatz 26 vorgesehen. Zwischen diesem Absatz und dem Schenkel 4 des Tragkörpers 1 ist eine Schraubendruckfeder 27 angeordnet, die als Rückholfeder für Stange und Bügel dient.

Die Vorrichtung arbeitet wie folgt:

Das auf den Gurtbandwickelrollen 9 aufgewickelte Gurtband ist durch den oberen Bereich der Lehne des Kindersitzes hindurchgeführt oder rückseitg des U-Profils 5 herausgeführt und bildet die Schultergurte eines Kinderrückhaltegurtbandsystems. In der in den Figuren dargestellten Blockierstellung wird eine Drehbewegung der Wickelrollen 9 und der damit verbundenen Wellen 10 durch den Eingriff der Außenverzahnungen 17 mit den Innenverzahnungen 18 der Ringkörper 19 verhindert, die ihrerseits durch den Bügel 21 und die damit verbundene Stange 25, welche den Schenkel 4 des Tragkörpers 1 durchsetzt, am Tragkörper 1 drehfest gelegt sind.

Zum Deblockieren der Gurtbandwickelrollen 9, was einerseits zum Verlängern der wirksamen Länge der Schultergurte und andererseits zum Spannen, also bestimmungsgemäßen Anlegen des Gurtbandsystems erforderlich ist, wird die Stange 25 durch Handkraft in Richtung 28 druckbeaufschlagt. Dadurch wird die Stange 25 mit dem darin befindlichen Bügel 21 nach unten, d.h. in Richtung auf die Drehachse 13 bewegt. Da die Schenkelenden 23 schräg nach innen verlaufen, drücken nun ihre Außenflächen in die entsprechend verlaufenden Nuten 24 der Ringkörper 19, wodurch diese nach außen, d.h. in Richtung auf die Gurtbandwickelrollen 9 axial verschoben werden und die Verzahnungen 17 und 18 außer Eingriff gelangen.

Dann können die Wellen 10, die nun nur noch über die Aufnahme 12 mit der Spann- und Wickelfeder 14 in Verbindung stehen, entgegen Kraft dieser Feder 14 zwecks Abwicklung des Gurtbandes oder in Gegenrichtung durch Kraft dieser Feder 14 gedreht werden.

Sobald die Druckkraft in Richtung 28 auf die Stange 25 aufhört, kehrt diese durch Kraft der Feder 27 in ihre Ausgangsstellung zurück, wonach auch die Ringkörper 19 durch Kraft der Federn 20 in ihre Ausgangsstellung zurückbewegt werden und wiederum die Verzahnungen 17 und 18 miteinander in Eingriff kommen, wodurch die Wellen 10 in ihrer Drehbewegung blockiert sind.

### Bezugszeichenliste

- 1 -: Tragkörper
- 2 -: Schenkel seitlich
- 3 -: Schenkel rückseitig
- 4 -: mittiger Schenkel rückseitig
- 5 -: U-Profil Lehne
- 6 -: Polster
- 7 -: Vorsprünge
- 8 -: Bohrungen
- 9 -: Gurtbandwickelrollen
- 10 -: Wellen
- 11 -: Vierkantprofile
- 12 -: Aufnahme
- 13 -: Achse
- 14 -: Spiralfeder
- 15 -: Federgehäuse
- 16 -: Niet
- 17 -: Außenverzahnung
- 18 -: Innenverzahnung
- 19 -: Ringkörper
- 20 -: Schraubenfeder
- 21 -: Bügel
- 22 -: Schenkel
- 23 -: Schenkelenden
- 24 -: Nuten
- 25 -: Stange
- 26 -: Absatz
- 27 -: Rückholfeder
- 28 -: Richtung

## Patentansprüche

1. Gurtbandaufwickcl- und Spannvorrichtung für die beiden Schultergurte eines Gurtbandrückhaltesystem für Kinder, bei der zwei drehbar gelagerte Gurtbandwickelrollen (9) achsgleich mit Abstand nebeneinander angeordnet sind, die mittels einer Blockiereinrichtung (17-20) selbsttätig blockiert sind und durch Betätigung von Betätigungsmitteln (21,25) deblockierbar sind, und mit einer zwischen den Wickelrollen (9) angeordneten Wickel- und Spannfeder (14), dadurch gekennzeichnet, daß ein aus Flachmaterial gebildeter Tragkörper (1) vorgesehen ist, der zwei seitliche Schenkel (2) aufweist, in denen jeweils ein Ende einer eine Wickelrolle (9) tragenden Welle drehbar gelagert ist, die drehfest mit dem einen Ende der Wickel- und Spannfeder verbunden ist, wobei das andere Ende der Wickel- und Spannfeder am Tragkörper festgelegt ist.

2. Vorrichtung nach Anspruch 1, dadurch gekennzeichnet, daß die Blockiereinrichtung (17-20) durch eine im Bereich zwischen Wickelrolle (9) und Spannfeder (14) vorgesehene Außenverzahnung (17) auf jeder Welle (10) sowie damit im Eingriff stehende drehfest jedoch axial verschiebbar gelagerte Ringkörper (19) mit Innenverzahnung (18) sowie je eine Druckfeder (20), welche den Ringkörper (19) in seiner die Drehbewegung der Welle (10)blockierenden Eingriffstellung hält, gebildet ist.

3. Vorrichtung nach Anspruch 1 oder 2, dadurch gekennzeichnet, daß die Spannfeder durch eine Spiralfeder (14) gebildet ist, deren inneres Ende in einem zur Aufnahme der Wellenenden (11) profilierten Aufnahmekörper (12) festgelegt ist und deren äußeres Ende an einem Federgehäuse (15) festgelegt ist, das wiederum fest mit dem Tragkörper (1) verbunden ist.

4. Vorrichtung nach einem der vorhergehenden Ansprüche, dadurch gekennzeichnet, daß die Betätigungsmittel einen etwa U-förmigen Bügel (21) aufweisen, welcher das Federgehäuse (15) umgreift und mit seinen schräg nach innen zulaufenden Schenkelenden (23) in dafür vorgesehene Quernuten (24) der Ringkörper (19) derart eingreift, daß beim Verschieben des Bügels (21) in Richtung auf die gemeinsame Wellenachse (13) die Ringkörper (19) entgegen Federkraft axial verschoben werden und außer Eingriff mit den Außenverzahnungen (17) gelangen.

5. Vorrichtung nach einem der vorhergehenden Ansprüche, dadurch gekennzeichnet, daß der Bügel (21) eine Verdrehsicherung für die Ringkörper (19) bildet.

6. Vorrichtung nach einem der vorhergehenden Ansprüche, dadurch gekennzeichnet, daß die Schenkelenden (23) des Bügels (21) gabelförmig ausgebildet sind und zu beiden Seiten der Wellenachse (13) liegen.

7. Vorrichtung nach einem der vorhergehenden Ansprüche, dadurch gekennzeichnet, daß der Bügel (21) am Ende einer Stange (25) angebracht ist, die verschiebbar am Tragkörper (1) gelagert ist und durch eine Ausnehmung vom rückseitigen Bereich der Lehne zum vorderseitigen geführt ist.

8. Vorrichtung nach einem der vorhergehenden Ansprüche, dadurch gekennzeichnet, daß auf der Stange (25) eine zwischen einem Absatz (26) der Stange (25) und dem Tragkörper (1) abgestützte Schraubenfeder (27) als Rückholfeder sitzt.

9. Vorrichtung nach einem der vorhergehenden Ansprüche, dadurch gekennzeichnet, daß die Wickelrollen (9) einerseits im Tragkörper (1) und andererseits im Federgehäuse (15) gelagert sind.

10. Add-on-Kindersitz zur Verwendung in Kraftfahrzeugen mit integriertem Gurtbandrückhaltesystem, mit zwei Schultergurten und einer Gurtbandaufwickel- und Spannvorrichtung für diese beiden Schultergurte, bei der zwei drehbar gelagerte Gurtbandwickelrollen (9) achsgleich mit Abstand nebeneinander angeordnet sind, die mittels einer Blockiereinrichtung (17-20) selbsttätig blockiert sind und durch Betätigung von Betätigungsmitteln (21,25) deblockierbar sind, mit einer zwischen den Wickelrollen (9) angeordneten Wickel- und Spannfeder (14)und mit einem aus Flachmaterial gebildeten Tragkörper (1), der zwei seitliche Schenkel (2) aufweist, in denen jeweils ein Ende einer eine Wickelrolle (9) tragenden Welle drehbar gelagert ist, die drehfest mit dem einen Ende der Wickel- und Spannfeder verbunden ist, wobei das andere Ende der Wickel- und Spannfeder am Tragkörper festgelegt und der Tragkörper im rückseitigen Lehnenbereich (6) des Sitzes befestigt ist.

11. Add-on-Kindersitz nach Anspruch 10 mit den Merkmalen einer oder mehrerer der Ansprüche 2 bis 9.

## Claims

1. A belt strap winding and tensioning means for both shoulder belts of a belt strap restraining system for children, in which two rotatably mounted belt strap winding rollers (9) are arranged axially equally at a distance next to one another, which by way of a blocking means (17-20) are automatically blocked and may be unblocked by actuating actuation means (21, 25), and with a winding and tensioning spring (14) arranged between the winding rollers (9), characterized in that there is provided a carrier body (1) formed of flat material, which comprises two lateral limbs (2) in which in each case one end of a shaft carrying a winding roller (9) is rotatably mounted, the shaft being rotationally rigidly connected to the one end of the winding and tension spring, wherein the other end of the winding and tension spring is fixed on the carrier body.

2. A device according to claim 1, characterized in that the blocking means (17-20) is formed by an outer toothing (17), on each shaft (10), which is provided in a region between the winding roller (9) and tensioning spring (14), as well as by an annular body (19) which has an inner toothing (18) and which is in engagement with the outer toothing and is rotationally rigidly but axially displaceably mounted, as well as in each case one compression spring (20) which holds the annular body (19) in its engagement position blocking the rotational movement of the shaft (10).

3. A device according to claim 1 or 2, characterized in that the tension spring is formed by a spiral spring (14) whose inner end is fastened in a receiving body (12) profiled for receiving the shaft ends (11) and whose outer end is fastened on a spring housing (15) which in turn is rigidly connected to the carrier body (1).

4. A device according to one of the preceding claims, characterized in that the actuation means comprise a roughly U-shaped bow (21) which surrounds the spring housing and with its limb ends (23) approaching obliquely inwards engages into transverse grooves (24) of the annular body (19) which are provided for this, in a manner such that on displacement of the bow (21) in the direction of the common shaft axis (13) the annular body (19) is axially displaced against spring force and comes out of engagement with the outer toothings (17).

5. A device according to one of the preceding claims, characterized in that the bow (21) forms a rotation securement for the annular body (19).

6. A device according to one of the preceding claims, characterized in that the limb ends (23) of the bow (21) are formed fork-like and lie on both sides of the shaft axis (13).

7. A device according to one of the preceding claims, characterized in that the bow (21) is attached on the end of a rod (21) which is displaceably mounted on the carrier body (1) and is guided through a recess from the rear-side region of the rest to the front-side one.

8. A device according to one of the preceding claims, characterized in that on the rod (25) there is seated a helical spring (27), as a restoring spring, supported between a shoulder (26) of the rod (25) and the carrier body (1).

9. A device according to one of the preceding claims, characterized in that the winding rollers (9) on the one side are mounted in the carrier body (1) and on the other side in the spring housing (15).

10. An add-on child seat for use in motor vehicles with an integrated belt strap restraining system, with two shoulder belts and a belt strap winding and tensioning device for these two shoulder belts, in which two rotatably mounted belt strap winding rollers (9) are arranged axially equally at a distance next to one another, which by way of a blocking means (17-20) are automatically blocked and may be unblocked by actuating actuation means (21, 25), with a winding and tensioning spring (14) arranged between the winding rollers (9) and with a carrier body (1) formed of flat material, which comprises two lateral limbs (2) in which in each case one end of a shaft carrying a winding roller (9) is rotatably mounted, the shaft being rotationally rigidly connected to the one end of the winding and tension spring, wherein the other end of the winding and tension spring is fixed on the carrier body.

11. An add-on child seat according to claim 10, with the features of one or several of the claims 2 to 9.

## Revendications

1. Dispositif d'enroulement et de tension de ceintures pour les deux ceintures baudriers d'un système de retenue à ceintures pour enfants, dans lequel deux rouleaux (9) d'enroulement de ceintures, qui sont montés de façon à pouvoir tourner, sont disposés côte-à-côte sur le même axe à distance l'un de l'autre, sont bloqués automatiquement au moyen d'un dispositif de blocage (17-20) et peuvent être débloqués par actionnement de moyens d'actionnement (21,25), et un ressort d'enroulement et de tension (14), disposé entre les rouleaux d'enroulement (9), caractérisé en ce qu'il est prévu un corps de support (1), qui est formé par un matériau plat et possède deux branches latérales (2), dans lesquelles est montée de façon à pouvoir tourner respectivement une extrémité d'un arbre portant un rouleau d'enroulement (9) et qui est relié avec blocage en rotation à une extrémité du ressort d'enroulement et de tension, l'autre extrémité du ressort d'enroulement et de tension étant fixée au corps de support.

2. Dispositif selon la revendication 1, caractérisé en ce que le dispositif de blocage (17-20) est formé par une denture extérieure (17) qui est prévue dans la zone située dans le rouleau d'enroulement (9) et le rouleau de tension (14) et est disposée sur chaque arbre (10) ainsi que par un corps annulaire (19), qui engrène avec cette denture extérieure en étant monté d'une manière bloquée en rotation, mais avec possibilité de déplacement axial et comporte une denture intérieure (18), ainsi que par un ressort de pression respectif (20) qui maintient le corps annulaire (19) dans sa position d'engrènement qui bloque le mouvement de rotation de l'arbre (10).

3. Dispositif selon la revendication 1 ou 2, caractérisé en ce que le ressort de tension est formé par un ressort spiral (14), dont l'extrémité intérieure est fixée dans un corps de logement (12) qui est profilé de manière à recevoir les extrémités (11) de l'arbre, et dont l'extrémité extérieure est fixée à un boîtier (15) du ressort, qui est reliée à nouveau de façon fixe au corps de support (1).

4. Dispositif selon l'une des revendications précédentes, caractérisé en ce que les moyens d'actionnement comportent un étrier (21) approximativement en forme de U, qui entoure le bôitier (15) du ressort et s'engage, par une extrémité de branche (23), qui s'étend obliquement vers l'intérieur, dans des rainures transversales (24) prévues à cet effet, du corps annulaire (19) de telle sorte que, lors de la translation de l'étrier (21) en direction de l'axe commun (13) de l'arbre, les corps annulaires (19) se déplacent axialement à l'encontre de la force du ressort et se dégagent des dentures extérieures (17).

5. Dispositif selon l'une des revendications précédentes, caractérisé en ce que l'étrier (21) forme un système de blocage en rotation pour les corps annulaires (19).

6. Dispositif selon l'une des revendications précédentes, caractérisé en ce que les extrémités (23) des branches de l'étrier (21) sont agencées en forme de fourches et sont situées des deux côtés de l'axe (13) de l'arbre.

7. Dispositif selon l'une des revendications précédentes, caractérisé en ce que l'étrier (21) est monté sur l'extrémité d'une tige (25) qui est tourillonnée de manière à être déplaçable sur le corps de support (1) et est guidée par un évidement depuis la partie arrière du sigèe en direction de l'extrémité avant.

8. Dispositif selon l'une des revendications précédentes, caractérisé en ce qu'un ressort hélicoïdal (27), qui est supporté entre un épaulement (26) de la tige (25) du corps de support (1), est monté en tant que ressort de rappel sur la tige (25).

9. Dispositif selon l'une des revendications précédentes, caractérisé en ce que les rouleaux d'enroulement (9) sont tourillonnés d'une part dans le corps de support (1) et d'autre part dans le boîtier (15) du ressort.

10. Siège rapporté pour enfant destiné à être utilisé dans des véhicules automobiles et comportant un système intégré de retenue à ceintures, comportant deux ceintures baudriers et un dispositif d'enroulement et de tension pour ces deux ceintures baudriers, dans lequel deux rouleaux (9) d'enroulement des ceintures, qui sont montés de manière à pouvoir tourner, sont disposés côte-à-côte sur le même axe à distance l'un de l'autre, sont bloqués automatiquement au moyen d'un dispositif de blocage (17-20) et peut être débloqués par actionnement de moyens d'actionnement (21,25), et un ressort d'enroulement et de tension (14), disposé entre les rouleaux d'enroulement (9), caractérisé en ce qu'il est prévu un corps de support (1), qui est formé par un matériau plat et possède deux branches latérales (2), dans lesquelles est montée de façon à pouvoir tourner respectivement une extrémité d'un arbre portant un rouleau d'enroulement (9) et qui est relié avec blocage en rotation à une extrémité du ressort d'enroulement et de tension, l'autre extrémité du ressort d'enroulement et de tension étant fixée au corps de support, et le corps de support étant fixé dans la partie arrière (6) du dossier du siège.

11. Siège rapporté pour enfant selon la revendication 10, présentant les caractéristiques d'une ou plusieurs des revendications 2 à 9.
